# EUROPÄISCHE PATENTSCHRIFT

(11) **EP 2 381 207 B1**
(45) Veröffentlichungstag und Bekanntmachung des Hinweises auf die Patenterteilung: **28.11.2012**
(21) Anmeldenummer: 11002851.1
(22) Anmeldetag: 06.04.2011
(51) Int. Cl.: F41G 7/22, G01S 3/786, G01C 21/00, G06K 9/64

(54) **3D-Zielvermessung und Zieleinweisung aus IR-Daten**
3D targeting and target designation from IR data
Mesure de cible 3D et orientation de cible à partir de données IR

(30) Priorität: 24.04.2010 DE 102010018144
(43) Veröffentlichungstag der Anmeldung: 26.10.2011
(73) Patentinhaber: MBDA Deutschland GmbH, 86529 Schrobenhausen (DE)
(72) Erfinder: Holicki, Michael, 56447 Aindling (DE); Zoz, Jürgen, 86316 Friedberg (DE); Schweyer, Nikolaus, 81739 München (DE); Speth, Johannes, 80797 München (DE)
(74) Vertreter: Avenhaus, Beate

(56) Entgegenhaltungen:
- EP-A2- 2 060 873
- WO-A2-98/30860
- CHRISTY S ET AL: "Terminal air-to-ground missile guidance by infrared seeker", PROCEEDINGS OF SPIE, Nr. 3086, 23. April 1997 (1997-04-23), Seiten 233-243, XP002076459, ISSN: 0277-786X

## Beschreibung

### TECHNISCHES GEBIET

Die vorliegende Erfindung betrifft ein Verfahren zur automatischen Erzeugung eines dreidimensionalen Referenzmodells als Geländeinformation für eine bildgebende Einrichtung mit einem vorgegebenen Sehfeld, insbesondere für einen mit einer Kamera ausgestatteten Suchkopf eines unbemannten Flugkörpers.

Zur Zielerkennung und zur Zielverfolgung verwenden moderne Flugkörpersysteme vielfach Modelle des Zieles. Diese Modelle stellen eine Beschreibung der Zielstruktur und gegebenenfalls der Zielumgebung dar und werden vor dem Einsatz in einer Missionsplanung erzeugt. Um die Anflugprofile flexibel wählen zu können und um eine hohe Treffergenauigkeit zu gewährleisten, müssen diese Modelle auch die dreidimensionale Struktur des Zieles und der Zielumgebung definieren.

Die Praxis zeigt, dass die zweidimensionale Struktur des Zieles und der Zielumgebung in der Horizontalen sehr gut und genau aus Luftbildern und Satellitenbildern zu gewinnen ist, dass es aber oft schwierig ist, gute und ausreichende Informationen über die Höhenstruktur zu bekommen. Es stehen vielfach nur ungenaue und grob gerasterte Höhendaten für das Gelände zur Verfügung, sodass Höhenwerte über im Vergleich zu Zielabmessungen große Abstände interpretiert werden müssen. Für Gebäude, Brücken, und dergleichen als dreidimensionale Zielobjekte auf dem Gelände fehlen solche Daten häufig und müssen daher geschätzt werden. Bei dieser Schätzung auftretende Fehler wirken sich negativ auf die Treffergenauigkeit und somit auf den Missionserfolg aus. Es ist daher erstrebenswert, Verfahren zur Verfügung zu haben, die es ermöglichen, eine gute und zuverlässige dreidimensionale Information aus Aufklärungsdaten zu erzeugen.

### STAND DER TECHNIK

Aus der EP 2 060 873 A2 ist bereits ein Verfahren zur linienbasierten, dreidimensionalen Rekonstruktion von Geländedaten aus Bildfolgen bekannt, die mit einer Bilderfassungseinrichtung eines Flugkörpers aufgenommen wurden. Bei diesem bekannten Verfahren werden zweidimensionale Liniensegmente aus den Einzelbildern extrahiert, über die Bildfolge verfolgt und aus den Spuren der Liniensegmente und den Navigationsdaten der Aufklärungsplattform werden dann dreidimensionale Liniensegmente ermittelt. Dabei werden neben den Liniensegmenten auch Kreuzungspunkte von solchen Segmenten berücksichtigt. Das Ergebnis ist ein Drahtmodell einer Szene, bestehend aus dreidimensionalen Liniensegmenten und topologischen Informationen über Kreuzungen von solchen Segmenten. Weiterhin wird für jedes dabei ermittelte Objekt eine Genauigkeitsschätzung in Form einer Kovarianzmatrix für die beteiligten Parameter durchgeführt. Zur Erstellung von Referenzmodellen für Flugkörpermissionen wurde dieses Verfahren bisher nicht verwendet.

Aus der WO 98/30860 A2 sind eine Vorrichtung und ein Verfahren zur Zielerkennung und zur Führung eines Projektils auf ein Ziel bekannt. Dabei werden zunächst dreidimensionale Eigenschaften des Ziels erhalten und in einer Datenbank gespeichert. Das Projektil wird dann in die Umgebung des Ziels geleitet und die Szene in diesem Gebiet wird vom Projektil betrachtet und mit der Datenbank der dreidimensionalen Datenbasis verglichen. Wird dabei ein Ziel identifiziert, welches die einzigartigen dreidimensionalen Eigenschaften des vorgegebenen Ziels aufweist, so wird das Projektil in dieses Ziel geleitet. Im Zuge der Missionsplanung wird von einem Missionsplaner mittels eines Computers und eines darauf ablaufenden Computerprogramms eine perspektivische Ansicht des Ziels in einem dreidimensionalen Drahtmodell erzeugt. Der Missionsplaner entfernt dann versteckte Linien aus dieser perspektivischen Ansicht und erzeugt ein dreidimensionales Referenzmodell des Gelände-Drahtmodells in aufwendiger manueller Tätigkeit.

Bei bislang angewendeten Verfahren zur Definition eines Zielobjekts für Flugkörpermissionen, musste somit stets ein Bearbeiter aus einer zweidimensionalen Vorlage, beispielsweise einer Luftaufklärungsfotografie, manuell zweidimensionale Linien der Zielstruktur extrahieren und individuell mit zusätzlichen Höhendaten versehen.

Aus dem Dokument CHRISTY S. et al.: "Terminal air-to-ground missile guidance by infrared seeker", PROCEEDINGS OF SPIE, Nr. 3086, 23. April 1997 (1997-04-23), Seiten 233-243, XP002076459, ISSN: 0277-786X ist ein Verfahren zur Zieleinweisung eines Flugkörpers bekannt, welches auf einem 2D-3D-Abgleich beruht. Dabei wird vor einer zu fliegenden Mission ein Zielpunkt in einem 3D-Modell festgelegt. Während der Mission projiziert der Flugkörper das 3D-Modell in sein Sensorbild und führt einen Abgleich mit aus dem Bild extrahierten Punkten durch. Aus den aufgefundenen Korrespondenzen wird eine Korrektur von Position und Lage des Flugkörpers ermittelt und dies wird zur Steuerung des Flugkörpers in das Ziel verwendet. Bei dem dort beschriebenen Verfahren wird davon ausgegangen, dass ein 3D-Modell bereits vorhanden ist. Wie dieses 3D-Modell erzeugt wird, bleibt offen.

### DARSTELLUNG DER ERFINDUNG

Aufgabe der vorliegenden Erfindung ist es, ein gattungsgemäßes Verfahren so weiter zu entwickeln, dass eine automatische Erzeugung des dreidimensionalen Referenzmodells ohne zusätzliche manuelle Bearbeitung von Höhendaten möglich ist.

Diese Aufgabe wird durch das im Patentanspruch 1 angegebene Verfahren gelöst.

Dieses erfindungsgemäße Verfahren zur automatischen Erzeugung eines dreidimensionalen Referenzmodells als Geländeinformation für eine bildgebende Einrichtung, das insbesondere für einen Suchkopf eines unbemannten Flugkörpers geeignet ist, weist die folgenden Schritte auf:
a) Bereitstellen eines aus Modellelementen gebildeten dreidimensionalen Geländemodells, das beispielsweise mit Hilfe von Satelliten- und/oder Luftaufklärung gewonnen worden ist;
b) Vorgabe von Positionsdaten der bildgebenden Einrichtung an zumindest einer geplanten Position sowie eines Richtungsvektors von der geplanten Position der bildgebenden Einrichtung zu einem vorgegebenen Zielpunkt im dreidimensionalen Geländemodell;
c) Erzeugen eines dreidimensionalen Referenzmodells des dreidimensionalen Geländemodells,
   c 1) wobei nur jene Modellelemente und Abschnitte von Modellelementen aus dem Geländemodell in das Referenzmodell übernommen werden, die in Blickrichtung des Richtungsvektors von der geplanten Position der bildgebenden Einrichtung nicht von anderen Modellelementen verdeckt sind und sich nicht außerhalb des Sehfeldes der bildgebenden Einrichtung befinden
   c 2) wobei den Modellelementen des dreidimensionalen Geländemodells jeweils eine Genauigkeitsinformation zugeordnet ist, die die Positionsgenauigkeit des betreffenden Modellelements wiedergibt, und
   c 3) wobei bei der Erzeugung des dreidimensionalen Referenzmodells Modellelemente mit einer besseren Genauigkeit bevorzugt verwendet werden und Modellelemente mit einer schlechteren Genauigkeit nicht in das Referenzmodell übernommen werden.

### VORTEILE

Diese erfindungsgemäße Erzeugung des dreidimensionalen Referenzmodells liefert ein Elementenmodell des Zielobjekts und von dessen Umgebung, das weniger Daten enthält als das ursprüngliche Geländemodell. Für die jeweilige Position der bildgebenden Einrichtung nicht sichtbare Modellelemente sind im Referenzmodell nicht mehr enthalten. Das Referenzmodell enthält somit nur noch jene Modellelemente, die bei einer dreidimensionalen Ansicht sichtbar sind, welche von einer an der geplanten Position befindlichen bildgebenden Einrichtung in Richtung des Blickrichtungsvektors aufgenommen wird. Hierdurch wird es möglich, ein von der bildgebenden Einrichtung aufgenommenes Bild unmittelbar mit dem erzeugten dreidimensionalen Referenzmodell zu vergleichen und durch Abgleich der Modellelemente mit entsprechenden Konturen im Bild eine Identifikation des Zielobjekts vorzunehmen. Zur Erzeugung des Referenzmodells werden somit nur jene Modellelemente und Abschnitte von Modellelementen verwendet, die in Blickrichtung des Richtungsvektors von der geplanten Position der bildgebenden Einrichtung aus nicht von anderen Modellelementen verdeckt sind. Hierdurch wird vermieden, dass unnötig Speicherplatz und Rechenzeit für in der aktuellen Ansicht sowieso nicht erkennbare Modellelemente, zum Beispiel Linien und Kreuzungspunkte, verbraucht wird. Es wird also für jedes Modellelement überprüft, ob es aus der gewählten Anflugrichtung, also in Richtung des Blickrichtungsvektors, im Sichtfeld der sich an der geplanten Position (zum Beispiel einer Flugbahn) befindlichen bildgebenden Einrichtung liegt und ob es sichtbar ist, also nicht eventuell durch andere Modellelemente verdeckt wird. Nicht sichtbare oder verdeckte Modellelemente werden erfindungsgemäß bei der weiteren Berechnung verworfen. Die Berechnung wird dadurch vereinfacht und auch der Umfang der Daten, die zur bildgebenden Einrichtung, beispielsweise zum Suchkopf eines unbemannten Flugkörpers, gesandt werden müssen, wird durch die Erfindung deutlich reduziert, da nur die Daten des Referenzmodells und nicht die umfangreicheren Daten des Geländemodells übertragen werden müssen.

Die Bevorzugung von Modellelementen mit einer höheren Genauigkeit, insbesondere bezüglich ihrer Höheninformation, erhöht die Genauigkeit der Information des Referenzmodells erheblich. Wenn die Information des Referenzmodells, also z.B. die Linien und Kreuzungspunkte, mit dem von der bildgebenden Einrichtung aufgenommenen Bild und den darin erkennbaren Strukturen verglichen wird, so führt die Verwendung von Modellelementen mit einer besseren Genauigkeit schneller zu einem qualitativ hochwertigen Abgleich des Referenzmodells mit dem aufgenommenen Bild.

Vorteilhaft ist eine Weiterbildung des erfindungsgemäßen Verfahrens, bei der die für die Übernahme in das Referenzmodell vorgesehenen Modellelemente daraufhin untersucht werden, ob sie in Blickrichtung des Richtungsvektors von der geplanten Position der bildgebenden Einrichtung aus verwechselbare Strukturen bilden. Derartige Modellelemente können zu einer erhöhten Ungenauigkeit bei der Zuordnung zum von der bildgebenden Einrichtung aufgenommenen Bild führen und werden daher nicht oder nur mit nachrangiger Priorität in das Referenzmodell übernommen.

Dabei ist es von Vorteil, wenn vor der Auswahl eines Modellelements für die Erzeugung des Referenzmodells eine Nachbarschaftsanalyse für das betreffende Modellelement durchgeführt wird, bei der überprüft wird, ob zu dem betreffenden Modellelement ähnliche Modellelemente in einem vorgegebenen Umfeld zum betreffenden Modellelement vorhanden sind und dann, wenn bei der Nachbarschaftsanalyse ein ähnliches Modellelement im vorgegebenen Umfeld festgestellt worden ist, das betreffende Modellelement nicht oder nur mit einer geringen Genauigkeitsinformation in das Referenzmodell übernommen wird. Durch derartige Nachbarschaftsanalysen werden ähnliche, im vorgegebenen Umfeld vorhandene Strukturen, beispielsweise sich wiederholende Strukturen, erkannt. Diese könnten zur Verwechslung beim Abgleich des von der bildgebenden Einrichtung aufgenommenen Bildes mit dem Referenzmodell und somit auch zu falschen Positionsannahmen führen. Derartige einander ähnliche Modellelemente werden bevorzugt dann in das Referenzmodell aufgenommen, wenn sie einer Steigerung der Prägnanz des Referenzmodells dienen und wenn die Verwechslungsgefahr beim Abgleich des Referenzmodells mit dem aufgenommenen Bild vernachlässigt werden kann.

Bevorzugt werden bei der Nachbarschaftsanalyse festgestellte Gruppen von ähnlichen Modellelementen vollständig oder gar nicht in das Referenzmodell übernommen.

Vorzugsweise weisen die Modellelemente Linien und Kreuzungspunkte von Linien sowie weiter vorzugsweise von den Linien begrenzte Flächen auf.

Bevorzugt geben die Linien Konturkanten von Objekten wieder, die in der vom dreidimensionalen Geländemodell nachgebildeten Realität vorhanden sind.

Die Erfindung wird nachfolgend anhand eines Beispiels unter Bezugnahme auf die Zeichnung näher erläutert; in dieser zeigt:

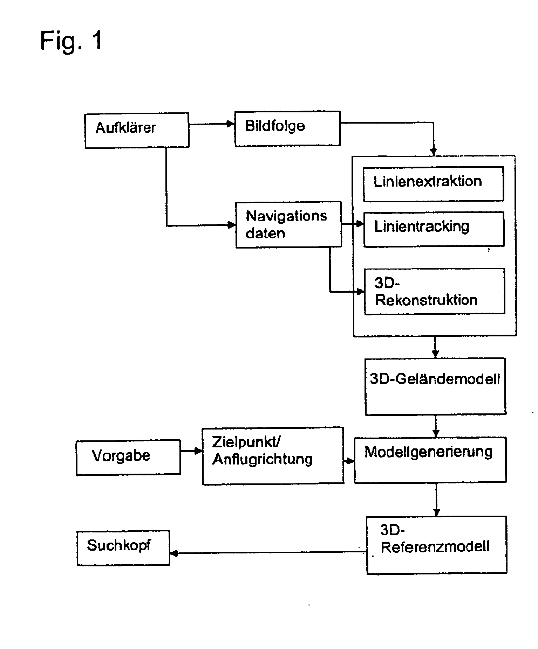

- Fig. 1: ein Flussdiagramm des Gesamtablaufs eines erfindungsgemäßen Verfahrens.

In Fig. 1 ist als Flussdiagramm der Gesamtablauf des erfindungsgemäßen Verfahrens zur Erzeugung eines dreidimensionalen Referenzmodells als Geländeinformation für eine bildgebende Einrichtung dargestellt.

Zunächst wird von einem Aufklärer, beispielsweise von einem Satelliten, einem Aufklärungsflugzeug oder einer Aufklärungsdrohne, zeitlich aufeinander folgend eine Vielzahl von Bildern des Zielgebietes aufgenommen. Diese Bildfolgen werden dann einer Rechnereinrichtung zugeführt, in welcher mittels geeigneter mathematischer Linienextraktionsverfahren aus den einzelnen Bildern Linien und sich daraus ergebende Kreuzungspunkte von Linien extrahiert werden. Jedem der einzelnen Bilder werden die zum Zeitpunkt der Bilderfassung aktuellen Navigationsdaten des Aufklärers zugeordnet.

Die in den einzelnen Bildern extrahierten Linien werden dann über die Bildfolge verfolgt, sodass sich daraus ein dreidimensionaler Linienverlauf einer jeden extrahierten Linie ergibt. Diese dreidimensionale Rekonstruktion aus einzelnen zweidimensionalen Bildern über den zeitlichen Verlauf der Bewegung des Aufklärers ergibt dann ein dreidimensionales Geländemodell, welches aus Modellelementen, nämlich im vorliegenden Fall aus Linien, Kreuzungspunkten von Linien und gegebenenfalls aus von Linien begrenzten Flächen, besteht.

Damit nun dieses dreidimensionale Geländemodell in einem Suchkopf eines anfliegenden Flugkörpers oder beispielsweise auch in der Zieleinrichtung eines anfliegenden Helikopters genutzt werden kann, um ein von einer bildgebenden Einrichtung des Suchkopfes aufgenommenes Bild mit dem Geländemodell vergleichen zu können, damit der Suchkopf sein Ziel zuverlässig und mit hoher Genauigkeit lokalisieren kann, wird aus dem dreidimensionalen Geländemodell ein dreidimensionales Referenzmodell generiert. Dabei sind der Zielpunkt und die Anflugrichtung, also die Blickrichtung der bildgebenden Einrichtung auf den Zielpunkt, vorgegeben. Somit bestimmen der Zielpunkt und die geplante Position der bildgebenden Einrichtung, also zum Beispiel des Flugkörpers oder Helikopters, den Richtungsvektor der Anflugrichtung. Das Referenzmodell wird also für einen Zeitpunkt erstellt, an dem sich beispielsweise ein mit der bildgebenden Einrichtung versehener Flugkörper an der geplanten Position befindet.

Es ist sinnvoll, wenn das ermittelte dreidimensionale Geländemodell an die speziellen physikalischen und algorithmischen Eigenschaften des verwendeten Suchkopfes des Flugkörpers angepasst ist. Aus diesen Eigenschaften lassen sich Anforderungen hinsichtlich der Komplexität und der Prägnanz eines Referenzmodells sowie hinsichtlich Sichtbarkeit, Genauigkeit und Unverwechselbarkeit einzelner Strukturen in dem Modell ableiten, damit der Suchkopf sein Ziel zuverlässig und mit hoher Genauigkeit lokalisieren kann. Ziel der Modellerzeugung ist es somit, ein Referenzmodell aus dem zur Verfügung stehenden dreidimensionalen Geländemodell zu extrahieren, welches hinsichtlich der Anforderungen für den verwendeten Suchkopf mit dem vorgegebenen Zielpunkt und der vorgegebenen Anflugrichtung optimal ist.

Die algorithmische Komplexität des im Suchkopf implementierten Matching- oder Tracking-Verfahrens wird durch die Anzahl der Modellelemente (im vorliegenden Fall beispielsweise Linien oder Kreuzungspunkte von Linien) bestimmt. Für die Echtzeitfähigkeit des im Suchkopf vorgesehenen Zieltrackers ist die Anzahl der Modellelemente auf eine suchkopfspezifische maximale Anzahl von Modellelementen beschränkt, die das Referenzmodell nicht überschreiten darf. Bei der Modellgenerierung ist darauf zu achten, dass diese suchkopfspezifische Grenze nicht überschritten wird. Eine Minimierung der im Referenzmodell enthaltenen Modellelemente ist daher anzustreben.

Die Elemente des Referenzmodells werden so gewählt, dass sie während der Annäherung des Flugkörpers an das Ziel aus der gewählten Anflugrichtung eine optimale Positions- und Lageschätzung des Flugkörpers durch den im Computer des Suchkopfes arbeitenden Lokalisierungsalgorithmus ermöglichen.

Die Bildung des Referenzmodells erfolgt vorzugsweise in vier Selektionsschritten, bei der jeweils bestimmte Modellelemente (zum Beispiel Linien, Flächen oder Kreuzungspunkte von Linien) aus dem ursprünglichen Geländemodell zur Übernahme in das Referenzmodell ausgewählt werden.

Im ersten Selektionsschritt erfolgt eine Selektion nach Sichtbarkeit. Es werden dabei alle Modellelemente verworfen, die aus der Perspektive des anfliegenden Flugkörpers gesehen nicht im Sichtfeld des Suchkopfes sind oder durch andere Objekte des Geländemodells verdeckt werden.

In einem zweiten Selektionsschritt erfolgt eine Selektion nach Genauigkeit. Dabei werden aus den Genauigkeitsmaßen der nach dem ersten Selektionsschritt verbleibenden Modellelemente berechnet, wie genau die Projektionen dieser Modellelemente in der Anflugperspektive des Flugkörpers sind. Modellelemente, die zu ungenau sind, werden verworfen. Zur Beurteilung der Genauigkeit werden dabei die bereits erwähnten Kovarianzmatrizen, die bevorzugt jedem Modellelement zugeordnet sind, herangezogen.

In einem dritten Selektionsschritt erfolgt eine Selektion nach Unverwechselbarkeit. Die nach Durchführung der ersten beiden Selektionsschritte verbleibenden Liniensegmente werden daraufhin untersucht, ob sie in der Projektion verwechselbare Strukturen bilden, zum Beispiel Gruppen von parallelen Linien In geringem Abstand. Solche Strukturen werden entweder ganz übernommen, falls sie aus wenigen Linien bestehen (zum Beispiel die beiden Kanten einer Straße), oder sie werden ganz verworfen, falls sie aus sehr vielen Linien bestehen (zum Beispiel eine Vielzahl paralleler Ackerfurchen). Es wird auch verhindert, dass im nächsten Selektionsschritt nur ein Teil einer solchen Struktur übernommen wird.

Schließlich erfolgt in einem vierten Selektionsschritt eine Selektion nach Prägnanz der Modellelemente. Zu jeder Gruppe von Modellelementen lässt sich durch Fehlerrechnung bestimmen, wie genau durch eine Übereinstimmung (Matching) dieser Linien bei einem Vergleich mit Linien, die aus einem von der bildgebenden Einrichtung gewonnenen Bild extrahiert werden, die Position und Lage der bildgebenden Einrichtung, also beispielsweise des Suchkopfes eine Flugkörpers, bestimmt werden kann. Es wird dabei von den nach dem dritten Selektionsschritt übrig gebliebenen Linien jene Gruppe von Linien endgültig in das Referenzmodell übernommen, bei denen diese Lokalisierung mit maximaler Genauigkeit erfolgt. Dadurch werden bevorzugt Linien in vielen unterschiedlichen Richtungen ins Referenzmodell übernommen.

Ist die Modellgenerierung unter Berücksichtigung dieser Randbedingungen erfolgt, so steht ein möglichst einfaches, aber aussagekräftiges dreidimensionales Referenzmodell zur Verfügung, das optimal an die physikalischen Eigenschaften des Suchkopfes und an die Bedürfnisse der im Computer des Suchkopfs arbeitenden Algorithmen zum Auffinden und Verfolgen der das Ziel beschreibenden Referenzstruktur in dem von der bildgebenden Einrichtung des Suchkopfes erzeugten Bild sowie auch zur relativen Positions- und Lageschätzung des Flugkörpers angepasst ist.

Nachdem das dreidimensionale Referenzmodell generiert worden ist, wird es an den Rechner des Suchkopfes übertragen. Während eines Anflugs erfolgt dort ein Abgleich des dreidimensionalen Referenzmodells mit dem von der bildgebenden Einrichtung aufgenommenen Bild, um die Position des Flugkörpers relativ zum Ziel zu bestimmen und so das Ziel sicher zu treffen.

Das erfindungsgemäße Verfahren benötigt als Eingangsdaten somit ein dreidimensionales Geländemodell, welches aus dreidimensionalen Modellelementen (zum Beispiel Liniensegmenten und gegebenenfalls noch anderen dreidimensionalen Primitiven, wie etwa Flächen) besteht. Zu den einzelnen Modellelementen existieren bevorzugt Genauigkeitsmaße in Form von Kovarianzmatrizen. Des Weiteren werden als Eingangsgrößen für die Durchführung des erfindungsgemäßen Verfahrens ein geplanter Zielpunkt, eine geplante Anflugrichtung und die Sensorcharakteristika der bildgebenden Einrichtung, zum Beispiel eines Suchkopfes eines Flugkörpers, benötigt.

Aus diesen Eingangsdaten liefert das erfindungsgemäße Verfahren ein Referenzmodell als Teilmenge der dreidimensionalen Modellelemente aus dem ursprünglichen dreidimensionalen Geländemodell.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verfahren zur automatischen Erzeugung eines dreidimensionalen Referenzmodells als Geländeinformation für eine bildgebende Einrichtung mit einem vorgegebenen Sehfeld, insbesondere für einen Suchkopf eines unbemannten Flugkörpers, mit den Schritten:
a) Bereitstellen eines aus Modellelementen gebildeten dreidimensionalen Geländemodells, das beispielsweise mit Hilfe von Satelliten- und/oder Luftaufklärung gewonnen worden ist;
b) Vorgabe von Positionsdaten der bildgebenden Einrichtung an zumindest einer geplanten Position sowie eines Richtungsvektors von der geplanten Position der bildgebenden Einrichtung zu einem vorgegebenen Zielpunkt im dreidimensionalen Geländemodell;
c) Erzeugen eines dreidimensionalen Referenzmodells des dreidimensionalen Geländemodells,
c 1) wobei nur jene Modellelemente und Abschnitte von Modellelementen aus dem Geländemodell in das Referenzmodell übernommen werden, die in Blickrichtung des Richtungsvektors von der geplanten Position der bildgebenden Einrichtung nicht von anderen Modellelementen verdeckt sind und/oder sich nicht außerhalb des Sehfeldes der bildgebenden Einrichtung befinden;
**dadurch gekennzeichnet**,
c 2) dass den Modellelementen des dreidimensionalen Geländemodells jeweils eine Genauigkeitsinformation zugeordnet ist, die die Positionsgenauigkeit des betreffenden Modellelements wiedergibt, und
c 3) dass bei der Erzeugung des dreidimensionalen Referenzmodells Modellelemente mit einer besseren Genauigkeit bevorzugt verwendet werden und Modellelemente mit einer schlechteren Genauigkeit nicht in das Referenzmodell übernommen werden.

2. Verfahren nach Anspruch 1,
**dadurch gekennzeichnet,**
**dass** die für die Übernahme in das Referenzmodell vorgesehenen Modellelemente daraufhin untersucht werden, ob sie in Blickrichtung des Richtungsvektors von der geplanten Position der bildgebenden Einrichtung aus verwechselbare Strukturen bilden.

3. Verfahren nach Anspruch 2,
**dadurch gekennzeichnet,**
- **dass** vor der Auswahl eines Modellelements für die Erzeugung des Referenzmodells eine Nachbarschaftsanalyse für das betreffende Modellelement durchgeführt wird, bei der überprüft wird, ob zu dem betreffenden Modellelement ähnliche Modellelemente in einem vorgegebenen Umfeld zum betreffenden Modellelement vorhanden sind und
- **dass** dann, wenn bei der Nachbarschaftsanalyse ein ähnliches Modellelement im vorgegebenen Umfeld festgestellt worden ist, das betreffende Modellelement nicht oder nur mit einer geringen Genauigkeitsinformation in das Referenzmodell übernommen wird.

4. Verfahren nach Anspruch 3,
**dadurch gekennzeichnet,**
**dass** bei der Nachbarschaftsanalyse festgestellte Gruppen von ähnlichen Modellelementen vollständig oder gar nicht in das Referenzmodell übernommen werden.

5. Verfahren nach einem der vorhergehenden Ansprüche,
**dadurch gekennzeichnet,**
- **dass** zur Überprüfung der Genauigkeit eines ermittelten Referenzmodells zunächst zumindest eine Gruppe von Modellelementen ausgewählt wird und dann für diese Gruppe bestimmt wird, mit welcher Genauigkeit die Position der bildgebenden Einrichtung durch Mustervergleich dieser Gruppe von Modellelementen mit aus einem von der bildgebenden Einrichtung aufgenommenen Bild extrahierten Modellelementen bestimmt werden kann, und
- **dass** nur Modellelemente jener Gruppen von Modellelementen in das Referenzmodell übernommen werden, bei denen die vorgenannte Positionsbestimmung mit einer Genauigkeit erfolgt, die über einem vorgegebenen Schwellenwert liegen.

6. Verfahren nach einem der vorhergehenden Ansprüche,
**dadurch gekennzeichnet,**
**dass** die Modellelemente Linien und Kreuzungspunkte von Linien sowie vorzugsweise von Linien begrenzte Flächen aufweisen.

7. Verfahren nach Anspruch 6,
**dadurch gekennzeichnet,**
**dass** die Linien Konturkanten von Objekten wiedergeben, die in der vom dreidimensionalen Geländemodell nachgebildeten Realität vorhanden sind.

## Claims

1. Method for automatically producing a three-dimensional reference model as terrain information for an imaging device having a prescribed field of view, in particular for a homing head of an unmanned missile, having the steps of:
a) providing a three-dimensional terrain model that is formed from model elements and has, for example, been obtained with the aid of satellite and/or aerial reconnaissance;
b) prescribing position data of the imaging device at at least one planned position, as well as a direction vector from the planned position of the imaging device to a prescribed target point in the three-dimensional terrain model;
c) producing a three-dimensional reference model of the three-dimensional terrain model,
c1) only those model elements and sections of model elements being accepted from the terrain model into the reference model which are not covered by other model elements in the viewing direction of the direction vector of the planned position of the imaging device and/or are not located outside the field of view of the imaging device;
characterized
c2) in that the model elements of the three-dimensional terrain model are each assigned an item of accuracy information which represents the positional accuracy of the relevant model element, and
c3) in that use is preferably made during the production of the three-dimensional reference model of model elements having a better accuracy, and model elements having a poorer accuracy are not accepted into the reference model.

2. Method according to Claim 1, **characterized in that** the model elements provided for acceptance into the reference model are examined as to whether they form interchangeable structures in the viewing direction of the direction vector from the planned position of the imaging device.

3. Method according to Claim 2, **characterized**
- **in that** before the selection of a model element for the production of the reference model, there is carried out for the relevant model element a neighbourhood analysis in which a check is made as to whether model elements similar to the relevant model element are present in prescribed surroundings relating to the relevant model element, and
- **in that** when the neighbourhood analysis establishes a similar model element in the prescribed surroundings, the relevant model element is not accepted into the reference model, or is accepted only with a low element of accuracy information.

4. Method according to Claim 3, **characterized in that** groups of similar model elements established in the neighbourhood analysis are accepted into the reference model completely or not at all.

5. Method according to one of the preceding claims, **characterized**
- **in that** in order to check the accuracy of a determined reference model firstly at least one group of model elements is selected, and then it is determined for this group how accurately the position of the imaging device can be determined by comparing patterns of this group of model elements with model elements extracted from an image recorded by the imaging device, and
- **in that** only model elements of those groups of model elements are accepted into the reference model in the case of which the above-named determination of position is performed with an accuracy which lies above a prescribed threshold value.

6. Method according to one of the preceding claims, **characterized in that** the model elements have lines and intersection points of lines as well as surfaces preferably bounded by lines.

7. Method according to Claim 6, **characterized in that** the lines represent contour edges of objects which are present in the reality simulated by the three-dimensional terrain model.

## Revendications

1. Procédé pour générer automatiquement un modèle de référence tridimensionnel en tant qu'information de terrain pour un dispositif de formation d'image ayant un champ de vision prédéterminé, en particulier pour une tête chercheuse de missile sans pilote, comportant les étapes consistant à :
a) fournir un modèle de terrain tridimensionnel formé à partir d'éléments de modèle, lequel modèle a par exemple été obtenu à l'aide de satellites et/ou par reconnaissance aérienne ;
b) spécifier des données de position du dispositif de formation d'image à au moins une position prévue et d'un vecteur de direction de la position prévue du dispositif de formation d'image en un point cible prédéterminé dans le modèle de terrain tridimensionnel ;
c) générer un modèle de référence tridimensionnel du modèle de terrain tridimensionnel,
c1) dans lequel on n'intègre au modèle de référence que les éléments de modèle et les parties d'éléments de modèle provenant du modèle de terrain dans le modèle de référence, qui ne sont pas masqués par d'autres éléments de modèle dans la direction de regard du vecteur de direction de la position prévue du dispositif de formation d'image et/ou qui ne se trouvent pas à l'extérieur du champ de vue du dispositif de formation d'image ;
caractérisé
c2) en ce qu'une information de précision est respectivement associée aux éléments de modèle du modèle de terrain tridimensionnel, laquelle information reproduit la précision de position de l'élément de modèle concerné, et
c3) lorsque le modèle de référence tridimensionnel est généré, des éléments de modèle ayant la meilleure précision sont de préférence utilisés et des éléments de modèle ayant une moins bonne précision ne sont pas intégrés au modèle de référence.

2. Procédé selon la revendication 1, **caractérisé en ce que** les éléments de modèle prévus pour l'intégration au modèle de référence sont examinés pour déterminer s'ils sont constitués de structures pouvant être confondues dans la direction de regard du vecteur de direction de la position prévue du dispositif de formation d'image.

3. Procédé selon la revendication 2, **caractérisé**
- **en ce que**, avant la sélection d'un élément de modèle pour générer le modèle de référence, une analyse de voisinage est effectuée pour l'élément de modèle concerné, lors de laquelle il est testé si des éléments de modèle semblables à l'élément de modèle concerné sont présents dans un environnement prédéterminé de l'élément de modèle concerné, et
- **en ce qu'**après cela, s'il a été déterminé lors de l'analyse de voisinage qu'un élément de modèle semblable était présent dans l'environnement prédéterminé, l'élément de modèle concerné n'est pas intégré au modèle de référence ou ne l'est qu'avec une faible information de précision.

4. Procédé selon la revendication 3, **caractérisé en ce que** lors d'une analyse de voisinage, des groupes déterminés d'éléments de modèle semblables ne sont pas entièrement ou pas du tout intégrés au modèle de référence.

5. Procédé selon l'une quelconque des revendications précédentes, **caractérisé**
- **en ce que**, pour examiner la précision d'un modèle de référence obtenu, on sélectionne tout d'abord au moins un groupe d'éléments de modèle puis on détermine ensuite pour ce groupe la précision avec laquelle la position du dispositif de formation d'image peut être déterminée par comparaison de motif de ce groupe d'éléments de modèle avec des éléments de modèle extraits d'une image acquise par le dispositif de formation d'image ; et
- **en ce qu'**on n'intègre au modèle de référence que les éléments de modèle des groupes d'éléments de modèle pour lesquels ladite détermination de position s'effectue avec une précision qui se situe au-dessus d'une valeur de seuil prédéterminée.

6. Procédé selon l'une quelconque des revendications précédentes, **caractérisé en ce que** les éléments de modèle présentent des lignes et des points d'intersection de lignes et de préférence, des surfaces délimitées par des lignes.

7. Procédé selon la revendication 6, **caractérisé en ce que** les lignes reproduisent des bords de contours d'objets qui sont présents dans la réalité simulée par le modèle de terrain tridimensionnel.
